# EUROPEAN PATENT SPECIFICATION

(11) **EP 3 835 896 B1**
(45) Date of publication and mention of the grant of the patent: **28.01.2026**
(21) Application number: 19214635.5
(22) Date of filing: 10.12.2019
(51) Int. Cl.: G05B 19/042, G05B 15/02

(54) **EDIT SESSION FOR MULTI TOOL MANAGEMENT**
BEARBEITUNG EINER SITZUNG ZUR MEHRFACHWERKZEUGVERWALTUNG
SESSION DE MONTAGE POUR GESTION D'OUTILS MULTIPLES

(43) Date of publication of application: 16.06.2021
(73) Proprietor: Siemens Schweiz AG, 8047 Zürich (CH)
(72) Inventor: Baumann, Urs, 6333 Hünenberg See (CH); Meier, Herbert, 6340 Baar (CH)
(74) Representative: Siemens Patent Attorneys

(56) References cited:
- US-A- 5 692 178
- US-A1- 2009 125 129
- US-A1- 2014 359 565
- "Software Technologies", 25 February 2016, SPRINGER, CHAM, article FELIX SCHW�GERL ET AL: "Filtered Model-Driven Product Line Engineering with SuperMod: The Home Automation Case", pages: 32 - 54, XP055694660, DOI: 978-3-319-30142-6

## Description

### FIELD OF THE INVENTION

This application relates to engineering and/or commissioning of automation devices, especially building automation devices.

### BACKGROUND

Nowadays most building automation systems support offline and online engineering workflows. This results in having engineering data of a device redundantly stored on multiple places like PC hard disks, office network storage, cloud storage or online on the installed system (e.g., NAS, Network Attached Storage) or on automation devices.

Roundtrip engineering for automation devices requires that multiple engineering or commissioning engineers or users may work in parallel on many automation devices e.g. in a building automation system.

The US patent application US20140359565A1 discloses technology that facilitates development of intuitive, feature-rich user interfaces for these devices in a cost-effective manner by shifting processing functions that cannot be performed by resource-limited processors of the electronic device to an external computing system independent of the device. Furthermore, a framework and protocol for enabling bi-directional communication between the electronic device and the device independent computing system is disclosed.

The article "Filtered Model-Driven Product Line Engineering with SuperMod: The Horne Automation Case" by Felix Schwägerl et al discloses an approach to perform Software Product Line Engineering by using a model-driven tool based upon a filtered editing model oriented towards version control. The tool provides integrated support for domain and application engineering, offering an iterative and incremental style of development.

As of today, there is no managed multiuser support during engineering or installation of building automation systems. Automation devices cannot be locked by users for engineering or commissioning sessions. During engineering or commissioning of larger automation system installation, the engineers need to coordinate their work on their own in order to avoid parallel loading to same device.

Typically, it is possible that more than one engineer may change device configuration of the same automation device. There is no device locking mechanism or other supporting function which prevents working in parallel on same device. Therefore, typically the principle of "last wins" is valid and may result in invalid device configurations.

Therefore, the object of the invention is to provide an effective and reliable mechanism for roundtrip engineering for automation devices.

The object is achieved by a method for controlling access to an automation device, especially a building automation device, for engineering and/or commissioning the automation device, wherein only one user is allowed to lock the automation device for engineering and/or commissioning by starting an edit session (with advantage an explicit or designated edit session); wherein the automation device stays running and accessible in an online modus during the edit session; wherein other users can recognize the device lock status of the active edit session and recognize the last engineering or commissioning action of the automation device in the runtime system; wherein no other users are able to lock the already locked automation device to start a further edit session; and wherein only the user who locked the automation device is able to unlock the automation device to end the started edit session. This means that only the user who locked the automation device is authorized to unlock the automation device to finish the currently effective edit session for the respective automation device. The invention especially provides indications of engineering data accuracy to the user between the multiple data instances (e.g. data on device and data in engineering tool). In addition, it also provides support so that the engineer does not use wrong, e.g., outdated data for loading to the device, which would mix up the device configuration and may result in device misfunctioning. The invention also provides an approach for enabling and managing roundtrip engineering wherein for instance multiple commissioning engineers (users) may work in parallel on many automation devices in building automation system. The proposed invention facilitates than only one user may change a device configuration at a given time. The users may be connected locally to the automation device, connected on site via network or connected via remote connection (e.g. internet, cloud). Advantageously a device unlocks after timeout or after a defined time period.

A first advantageous embodiment of the invention is that the last engineering or commissioning action provides information about the user who was locking the automation device. Therefore, a subsequent user is aware who was the preceding user in engineering or commissioning the automation device. Advantageously a list of the preceding users is provided to the current user. Advantageously the list of the preceding users is provided in chronological order. Advantageously the subsequent user (means the user who is currently locking the automation device) is provided with the information which modifications to the device are accomplished by each of the preceding users.

A further advantageous embodiment of the invention is that the automation device will be automatically unlocked after a defined timeout period. This increases the accessibility of users to the automation device. E.g. in case of no tool interactions, e.g., tool connection has broken, or user has forgotten to unlock device at end of commissioning, or the user just physically disconnected the tool from the automation device.

A further advantageous embodiment of the invention is that during an edit session, the user is able to perform multiple change and/or download commands for the automation device. Typically, up to 20 cycles or even more of change commands and/or download commands are feasible.

A further advantageous embodiment of the invention is that during an engineering or commissioning edit session the automation device stays in run mode and online changes may occur simultaneously, for instance executed by other system components (e.g. BACnet 3^{rd} party devices). This increases the efficiency of engineering or commissioning edit sessions.

A further advantageous embodiment of the invention is that by starting the engineering or commissioning edit session engineering data on a tooling device (e.g. engineering tool, commissioning tool) are automatically be updated with last online changes. This secures the data consistency on the automation device. An engineering or commissioning edit session can be started explicitly (e.g. by user input).

A further advantageous embodiment of the invention is that during the edit session, the user may change device configuration like control program or data point configuration and perform fast delta load. This operation just downloads the changes and keeps the baseline. The automation device incorporates all changes without stopping the plant operation. Changes of device configuration can be accomplished while the automation device is in operation.

A further advantageous embodiment of the invention is that during an engineering or during a commissioning session all loading activities are logged. The respective tool reads the last commissioning action including user information from the device and provides it to the user, e.g. in a file or on an output device (e.g. display of the tool).

The object is further achieved by a tool for engineering and/or commissioning automation devices, especially building automation devices, wherein the tool is configured that
only one user is allowed to lock the automation device for engineering or commissioning by starting an edit session;
the automation device stays running and accessible in online modus during the edit session;
other users can see the device lock status of the active edit session and see the last engineering or commissioning action of the automation device in the runtime system;
no other users are able to lock the already locked automation device to start a further edit session; and
only the user who locked the automation device is able to unlock the automation device to end the started edit session. The tool can be an engineering, or a commissioning tool implemented by suitable software means on a computing device (e.g. Personal Computer, Tablet-Computer, mobile Communication device (e.g. Smartphone)). The tool especially enables managing of automation devices, e.g. in building automation system. The tool may be connected locally to the automation device, connected on site via network or connected via remote connection (e.g. internet, cloud) to the automation device. An engineering or commissioning edit session can be started explicitly (e.g. by user input). Optionally there is an auto unlock after timeout (by device).

A further advantageous embodiment of the invention is that the tool is configured to provide the last engineering or commissioning action information about the user who was locking the automation device. Therefore, a subsequent user is aware who was the preceding user in engineering or commissioning the automation device. Advantageously a list of the preceding users is provided by the tool to the current user. Advantageously the list of the preceding users is provided by the tool in chronological order. Advantageously the tool provides to the subsequent user (means the user who is currently locking the automation device) the information which modifications to the automation device are accomplished by each of the preceding users.

A further advantageous embodiment of the invention is that the tool is configured to unlock the automation device after an edit session. This increases the accessibility of users to the automation device. E.g. in case of no tool interactions, e.g., tool connection has broken, or user has forgotten to unlock device at end of commissioning, or the user just physically disconnected the tool from the automation device.

A further advantageous embodiment of the invention is that the tool is configured that during the edit session, the user may perform multiple change and/or download commands for the automation device. Typically, up to 20 cycles or even more of change commands and/or download commands are feasible.

Advantageously the tool is configured that during the edit session the automation device stays in run mode. This enables that online changes to the automation device may occur simultaneously to operating the automation device. This increases the efficiency of engineering or commissioning edit sessions.

A further advantageous embodiment of the invention is that the tool (e.g. engineering or commissioning tool) is configured that by starting the engineering or commissioning edit session the engineering and/or commissioning data may automatically be updated with last online changes. This secures the data consistency on the automation device.

A further advantageous embodiment of the invention is that the tool is configured that during the edit session the user may change device configuration like control program or data point configuration and perform fast delta load of data to the automation device. This enables downloading the changes and keeping the baseline. The automation device incorporates all changes without stopping the plant operation. Changes of device configuration by the tool can be accomplished while the automation device is in operation.

A further advantageous embodiment of the invention is that the tool is configured that during an engineering or during a commissioning session all loading activities are logged on the automation device. Advantageously the tool is configured to read the last commissioning action including user information from the automation device and providing it to the user, e.g. in a file or on an output device (e.g. display of the tool).

A further advantageous embodiment of the invention is that the tool sends periodically a heartbeat signal earlier than the automation device (controller) time-out to the automation device in order to keep the device locked and the active edit session running.

A further advantageous embodiment of the invention is that in case of an exceptional tool connection lost (e.g. broken cable or unplugged cable) the automation device (e.g. controller) will be automatically unlocked after a defined timeout period.

### BRIEF DESCRIPTION OF THE DRAWINGS

In the following possible embodiments of the method and for the tool for controlling access to an automation device, especially a building automation device are described with reference to enclosed figures.
- FIG 1: illustrates an exemplary flowchart for a method for controlling access to an automation device;
- FIG 2: illustrates a first exemplary scenario for roundtrip engineering of automation devices;
- FIG 3: illustrates a second exemplary scenario for round-trip engineering of automation devices;
- FIG 4: illustrates a third exemplary scenario for roundtrip engineering of automation devices with engineering data redundancy;
- FIG 5: illustrates a fourth exemplary scenario for round-trip engineering of automation devices with multiple users working with different tools and engineering data instances;
- FIG 6: illustrates exemplary loading operations and services to perform roundtrip engineering;
- FIG 7: shows an exemplary state diagram for illustrating an exemplary edit session for roundtrip engineering;
- FIG 8: illustrates an exemplary flow chart for performing roundtrip engineering;
- FIG 9: illustrates an exemplary diagram for change-log handling between engineering tool and device;
- FIG 10: illustrates an exemplary Log-Buffer for recorded changes on the device; and
- FIG 11: illustrates examples for change-log entries.

### DETAILED DESCRIPTION

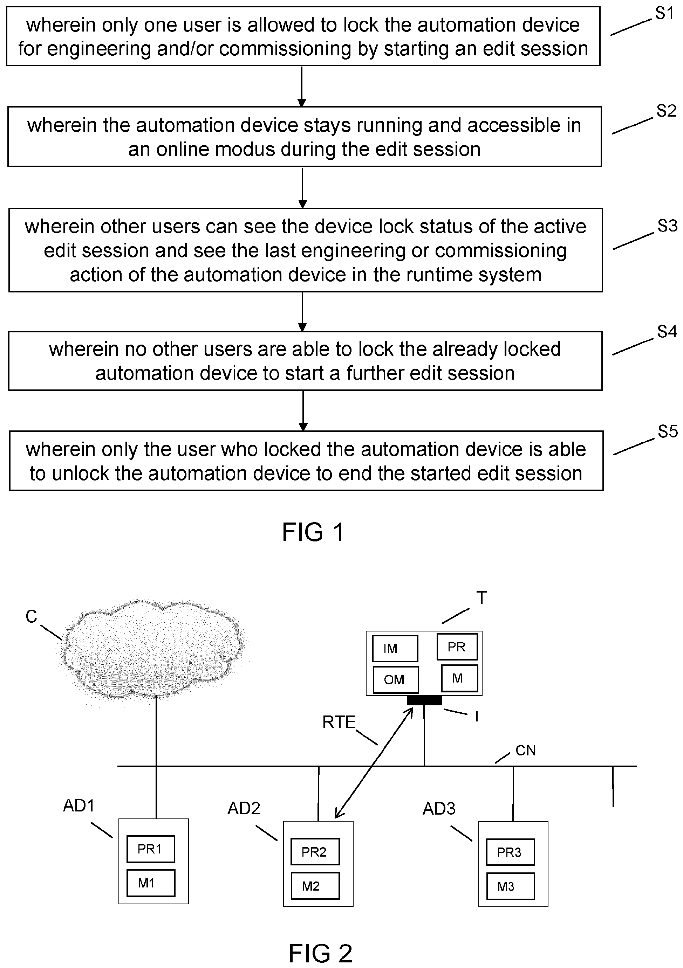

Figure 1 illustrates an exemplary flowchart for a method for controlling access to an automation device, for engineering and/or commissioning the automation device,
(S1) wherein only one user is allowed to lock the automation device for engineering and/or commissioning by starting an edit session;
(S2) wherein the automation device stays running and accessible in an online modus during the edit session;
(S3) wherein other users can see the device lock status of the active edit session and see the last engineering or commissioning action of the automation device in the runtime system;
(S4) wherein no other users are able to lock the already locked automation device to start a further edit session;
(S5) wherein only the user who locked the automation device is able to unlock the automation device to end the started edit session.

Optionally there is an automatic unlock ("auto unlock") after timeout (by automation device).

During engineering or commissioning building automation systems many different users may work on the same automation device (e.g. controller) over months. The present invention provides an efficient approach for roundtrip engineering of automation devices. Engineering and commissioning automation devices are performed by suitable tools (e.g. engineering tools or commissioning tools). The tools comprise hardware and software components to have access to the automation devices to transfer data (e.g. configurations, firmware) to the respective automation devices. In a building automation system, the automation devices (e.g. controllers to control field devices (e.g. actuators or sensors)) are connected via communication networks (e.g. BACnet). Via the respective communication network a tool can be connected to the respective automation device.

The present invention enables the managing of loaded and valid data on the automation device and on the tool (e.g. engineering tool or commissioning tool). The tool can be implemented on a Personal Computer (PC), or on a tablet-computer, or on a mobile communication device (e.g. Smartphone).

Advantageously the last engineering or commissioning action provides information about the user who was locking the automation device.

Advantageously the automation device will be automatically unlocked after a defined timeout period. For instances in case of no tool interactions, e.g. tool connection has broken, or user has forgotten to unlock device at end of commissioning (e.g. user just physically disconnected tool). In order to minimize unlock after device timeout, the tool sends a heartbeat periodically during active connection.

Advantageously during a commissioning edit session, the user may perform multiple change and download commands for the automation device. Typically up to 20 cycles or even more.

Advantageously during an engineering or commissioning edit session the automation device stays in run mode and online changes can be performed simultaneously.

Advantageously when starting the engineering or commissioning edit session engineering data on a tooling device (e.g. engineering tool) are automatically be updated with last online changes.

Advantageously during the edit session, the user may change device configuration like control program or data point configuration and perform fast delta load. This operation just downloads the changes and keeps the baseline. The automation device incorporates all changes without stopping the plant operation.

Advantageously during an engineering or during a commissioning session all loading activities are logged. Advantageously the tool reads the last commissioning action including user information from the device and provides it to the user (e.g. in a list or on a display of the tool). Advantageously during an engineering or during a commissioning session, a user can run multiple edit sessions with multiple devices in parallel. Advantageously during an engineering or during a commissioning session, multiple users can synchronize their local engineering data by using the change log of the device.

The invention provides indications of engineering data accuracy to the user between the multiple data instances. In addition, it also provides support so that the engineer does not use wrong, e.g., outdated data for loading to the device, which would mix up the device configuration and may result in device misfunctioning or malfunctioning.

The invention enables the managing of roundtrip engineering where multiple commissioning engineers (users) may work in parallel on many automation devices in building automation system. The proposed solution guarantees that only one user may change a device configuration at a given time. The users may be connected locally to device, connected on site via network or connected via remote connection (e.g. internet, cloud).

The invention supports a rule set which allows fast data synchronization between device online data and offline engineering data. Online and offline changes may occur in parallel. The invention further provides a proper update and merge mechanism between online and offline data.

The invention supports parallel work with or without engineering data in a building automation system consisting of many automation devices:
- wherein only one user can lock a given device for commissioning by starting a commissioning edit session (e.g. an explicit commissioning edit session);
- wherein the device stays running and accessible in the online system during commissioning edit session;
- wherein other users can see the device lock status (active edit session) and last commissioning action of an automation device in the runtime system;
- wherein no other user can lock (start edit session) an already locked automation device;
- wherein only the user who locked the automation device can unlock (end edit session) this device again;
- wherein the automation device will unlock automatically after a defined timeout period in case of no tool interactions, e.g., tool connection has broken, or user has forgotten to unlock device at end of commissioning (e.g. user just physically disconnected tool).

During a commissioning edit session, the user may perform multiple change and download commands (typically up to 20 cycles or even more). During this commissioning phase, the device stays in run mode and online changes may occur simultaneously. Advantageously at start of an edit session, the engineering data on the tooling device may automatically be updated with last online changes by uploading the last online changes via change log file. Advantageously during an edit session, the user may change device configuration like control program or data point configuration and perform fast delta load. This operation just downloads the changes (e.g. by downloading the last offline changes via change log file) and keeps the baseline. The device incorporates all changes without stopping the plant operation.

The user can also perform a full load which creates a new baseline and performs a full device configuration load. During this operation, the plant gets stopped.

Advantageously during an edit session, any online changes (performed by any other online system client) get automatically be incorporated into the offline engineering data (and do not get lost) by uploading and merging it back into the offline engineering data.

Advantageously during a commissioning session, all loading activities are logged. The tool reads the last commissioning action including user information from the device and shows it to the user.

The fast round trip engineering cycles with fast delta load and upload save a lot of time during commissioning phase (many minutes up to an hour per device) and therefore save cost. The plant must not always go to stop mode when loading or changing the program and device configuration. Putting a primary plant to stop for loading is very time consuming, not efficient and not acceptable in regional companies.

The underlying invention provides a mechanism which supports online and offline changes in parallel and keeps data integrity brings a lot of additional flexibility and makes workflows much easier and understandable (nothing gets lost). The inventive mechanism keeps online functioning during commissioning phase and, e.g., avoids system alarms and other online system impact. The underlying invention furthermore provides a mechanism for keeping data consistency in automation devices, especially for building automation systems.

### Further advantages of the present invention:

- Introducing edit sessions prevents multiple users working in parallel with a device.
- Managing engineering data in the system keeps data integrity.
- The fast round trip engineering cycles with fast delta load and upload save a lot of time during commissioning phase (many minutes up to an hour per device) and therefore save cost.
- The plant must not always go to stop mode when loading or changing the program and device configuration. Putting a primary plant to stop for loading is very time consuming, not efficient and not acceptable to customers.
- Providing a mechanism which supports online and offline changes in parallel and keeps data integrity brings a lot of additional flexibility and makes workflows much easier and understandable (nothing gets lost). The inventive mechanism keeps online functioning during commissioning phase and, e.g., avoids system alarms and other online system impacts.

Figure 2 illustrates a first exemplary scenario for roundtrip engineering of automation devices AD1 - AD3. Figure 2 shows a tool T (e.g. engineering tool or commissioning tool) for engineering and/or commissioning automation devices AD1 - AD3, especially building automation devices, wherein the tool T is configured that
- only one user is allowed to lock the automation device AD1 - AD3 for engineering or commissioning by starting an edit session (e.g. an explicit commissioning edit session, initiated by user input);
- the automation device stays running and accessible in online modus during the edit session;
- other users can see the device AD1 - AD3 lock status of the active edit session and see the last engineering or commissioning action of the automation device AD1 - AD3 in the runtime system;
- no other users are able to lock the already locked automation device AD1 - AD3 to start a further edit session; and
- only the user who locked the automation device AD1 - AD3 is able to unlock the automation device AD1 - AD3 to end the started edit session.

The tool T comprises a processing unit (processor) PR, one or more memory units M (e.g. RAM, Flash memory), input means IM (e.g. keyboard), and output means OM (e.g. display). Furthermore, the tool T comprises one or more interfaces I to get connected e.g. to the automation devices AD1 - AD3. In the exemplary illustration according to figure 2 the tool T is connected to the automation devices AD1 - AD3 (e.g. controller) and to a cloud infrastructure C (e.g. a server or a database server) via a communication network CN (e.g. BACnet IP or BACnet/SC). In a building automation system, each of the automation devices AD1 - AD3 controls a set of field devices (e.g. actors or sensors) for example to perform HVAC (heating, ventilation, air conditioning) solutions for a building. Typically, the field devices are connected to the respective automation device AD1, AD2, or AD3 (e.g. controller) via a suitable field bus (e.g. KNX bus). The automation devices AD1 - AD3 comprise respective processor means PR1 - PR3 and respective memories M1 - M3.

In the exemplary illustration according to figure 2 the tool T is configured to perform roundtrip engineering RTE with the automation device AD2. The tool T provides the feasibility and functionality of roundtrip engineering RTE to the automation device AD2 and synchronizes software artifacts (e.g. source code or configuration files) on the automation device AD2 and secures the consistency of the respective software artefacts. Roundtrip engineering RTE especially enables to synchronize artifacts by incrementally updating the respective artifacts including reflecting changes made to the respective artifacts.

Advantageously the tool T is configured to provide the last engineering or commissioning action information about the user who was locking the automation device AD1 - AD3.

Advantageously the tool T is configured to unlock the automation device AD1 - AD3 after an edit session. For instance, in case of no tool interactions, e.g. tool connection has broken, or user has forgotten to unlock device at end of commissioning (e.g. user just physically disconnected the tool T).

Advantageously the tool T is configured that during the edit session, the user may perform multiple change and/or download commands (typically, up to 20 cycles or even more) for the automation device AD1 - AD3.

Advantageously the tool T is configured that during the edit session the automation device AD1 - AD3 stays in run mode (online changes may occur simultaneously).

Advantageously the tool T (e.g. engineering or commissioning tool) is configured that by starting the engineering or commissioning edit session the engineering and/or commissioning data are automatically be updated with last online changes.

Advantageously the tool T is configured that during the edit session the user may change device configuration like control program or data point configuration and perform fast delta load of data to the automation device AD1 - AD3. This operation just downloads the changes and keeps the baseline. The device incorporates all changes without stopping the plant operation.

Due to various offline and online workflow scenarios with various different tools T and involvement of different users from different business organizations, many different users may work on the same device AD1 - AD3 (even over months). Therefore, the loaded and valid data on automation devices AD1 - AD3 and in the tool T needs to be managed. This enables the tool T.

The engineering data of an automation device or job may be stored on various places like the automation device AD1 - AD3 itself, a network accessible storage device, a management station, a tooling device T or a cloud repository (in a suitable cloud infrastructure C).

In order to handle this data redundancy and support the user the tooling device T provides the following advantages:
- the tooling device T may provide the engineering data including unique data identification, time stamp and data accuracy status information to the user;
- based on this information, the user can easily decide on which data is valid for commissioning;
- based on data identification, baseline and time stamp information, the tooling device T may reject delta download in case of baseline mismatch in order to keep data integrity;
- the engineering data on the tooling device T may automatically be updated with last online changes at start edit session;
- during edit session, any online changes (performed by any other online system client) may automatically be incorporated into the engineering data (and do not get lost);
- during a commissioning session, all loading activities are logged on the automation device;
- the tooling device reads the last action from the automation device and provides it to the user (e.g. on output means OM (e.g. display) of the tool T);
- the final valid engineering data including data identification, time stamps and baseline information may be automatically downloaded to the automation device at end of edit session;
- after close edit session, the automation device AD1 - AD3 is ready for a next commissioning edit session by any user.

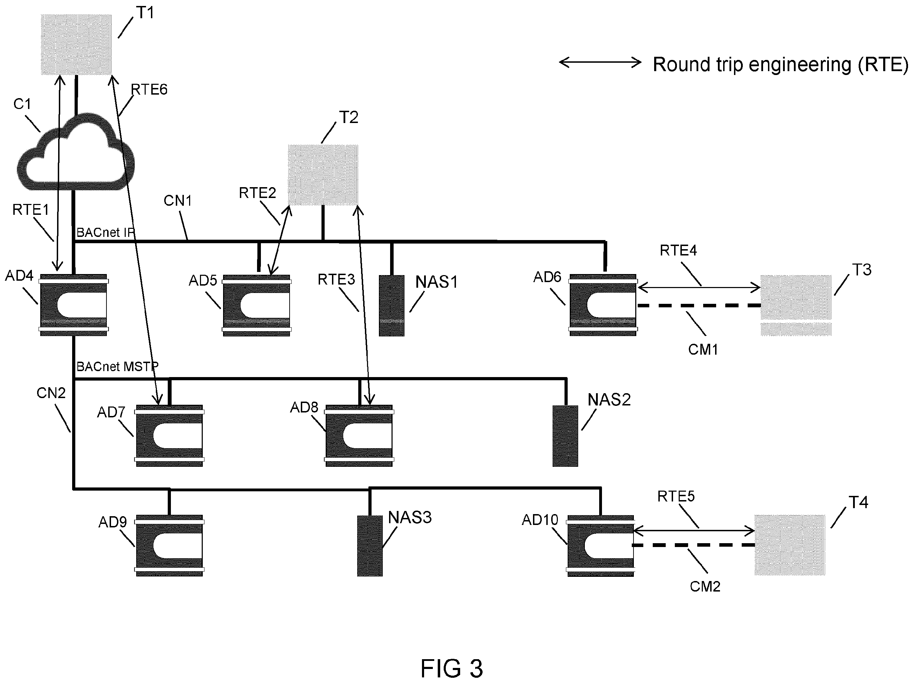

Figure 3 illustrates a second exemplary scenario for round-trip engineering of automation devices AD4 - AD10 by using a suitable tool T1 - T4. In the exemplary scenario according to figure 3 automation devices (e.g. controller) AD4 - AD10, network attached storage devices NAS1 - NAS3 and the tools T1 and T2 are connected via communication networks CN1, CN2. The communication network CN1 is realized by an exemplary BACnet IP or BACnet/SC network, the communication network CN2 is realized by an exemplary BACnet MSTP network. The communication network CN1 provides the connection to a cloud infrastructure C1. The tool T1 is connected to the cloud infrastructure C1 and has access to the communication network CN1.

The exemplary scenario according to figure 3 shows possible fields of application for the present invention to perform roundtrip engineering RTE1 - RTE6. Tool T1 is used for roundtrip engineering RTE1, RTE6 for the automation devices AD4, AD7. Tool T2 is used for roundtrip engineering RTE2, RTE3 for the automation devices AD5, AD8. Tool T3 is used for roundtrip engineering RTE4 for the automation device AD6. Tool T4 is used for roundtrip engineering RTE5 for the automation device AD10. The tools T3 and T4 are not connected via networks to the respective automation device AD6 or AD10. The tools T3 and T4 are connected via suitable communication means CM1, CM2 (e.g. USB connection, connection to local port or local WiFi connection) to the respective automation device AD6 or AD10.

The exemplary scenario according to figure 3 shows that round-trip engineering RTE1 - RTE6 can be performed via local network, remote network, local port, fast network (e.g. BACnet IP or BACnet/SC), slow network (e.g. BACnet MSTP), or via cloud infrastructure C1.

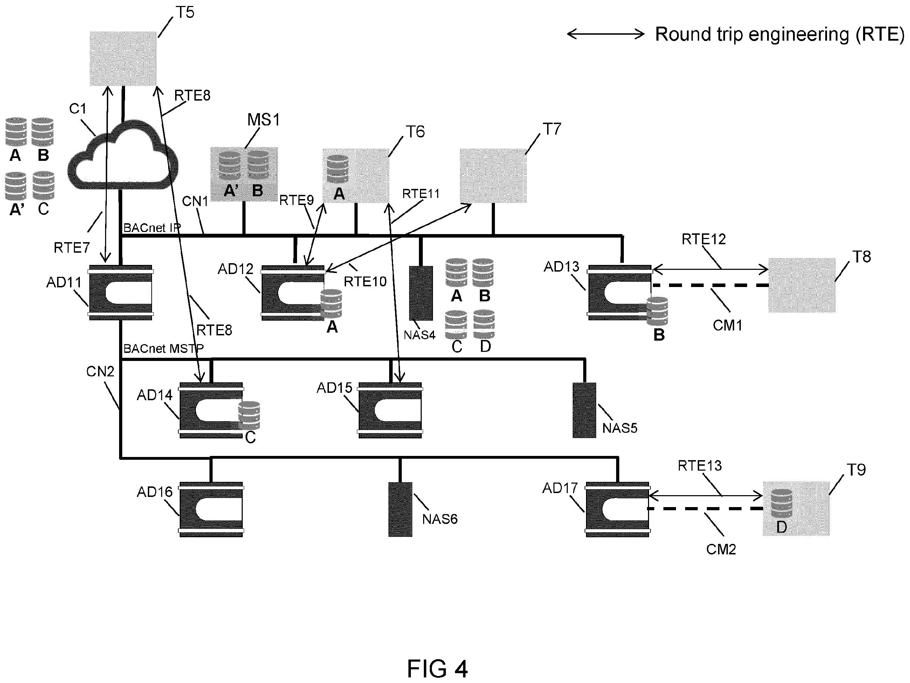

Figure 4 illustrates a third exemplary scenario for roundtrip engineering of automation devices AD11 - AD17 by using a suitable tool T5 - T9 with engineering data redundancy. In the exemplary scenario according to figure 4 automation devices (e.g. controller) AD11 - AD17, network attached storage devices NAS4 - NAS6 and the tools T6 and T7 are connected via communication networks CN1, CN2. The communication network CN1 is realized by an exemplary BACnet IP network, the communication network CN2 is realized by an exemplary BACnet MSTP network. The communication network CN1 provides the connection to a cloud infrastructure C1. The tool T5 is connected to the cloud infrastructure C1 and has access to the communication network CN1.

The exemplary scenario according to figure 4 shows possible fields of application for the present invention to perform roundtrip engineering RTE7 - RTE13. Tool T5 is used for round-trip engineering RTE7, RTE8 for the automation devices AD11, AD14. Tool T6 is used for roundtrip engineering RTE9, RTE11 for the automation devices AD12, AD15. Tool T7 is used for roundtrip engineering RTE10 for the automation device AD12. Tool T8 is used for roundtrip engineering RTE12 for the automation device AD13. Tool T9 is used for roundtrip engineering RTE13 for the automation device AD17. The tools T8 and T9 are not connected via networks to the respective automation device AD13 or AD17. The tools T8 and T9 are connected via suitable communication means CM1, CM2 (e.g. USB connection, connection to local port or local WiFi connection) to the respective automation device AD13 or AD17.

The exemplary scenario according to figure 4 shows that round-trip engineering RTE7 - RTE13 can be performed via local network, remote network, local port, fast network (e.g. BACnet IP or BACnet/SC), slow network (e.g. BACnet MSTP), or via cloud infrastructure C1. The exemplary scenario according to figure 4 furthermore shows that the engineering data A,B,C,D,A' for roundtrip engineering RTE7 - RTE13 can be stored locally on the tool (on tool T6 are the engineering data A; on tool T9 are the engineering data D), or on the automation device (on automation device AD12 are the engineering data A; on automation device AD13 are the engineering data B), or network attached storage devices (on network attached storage device NAS4 are the engineering data A,B,C,D), or in the cloud (in the cloud infrastructure C1 are the engineering data A,B,A',C), or on a management station (on management station MS1 are the engineering data A',B). For instance, a management station MS1 for building management systems can be Siemens Desigo CC.

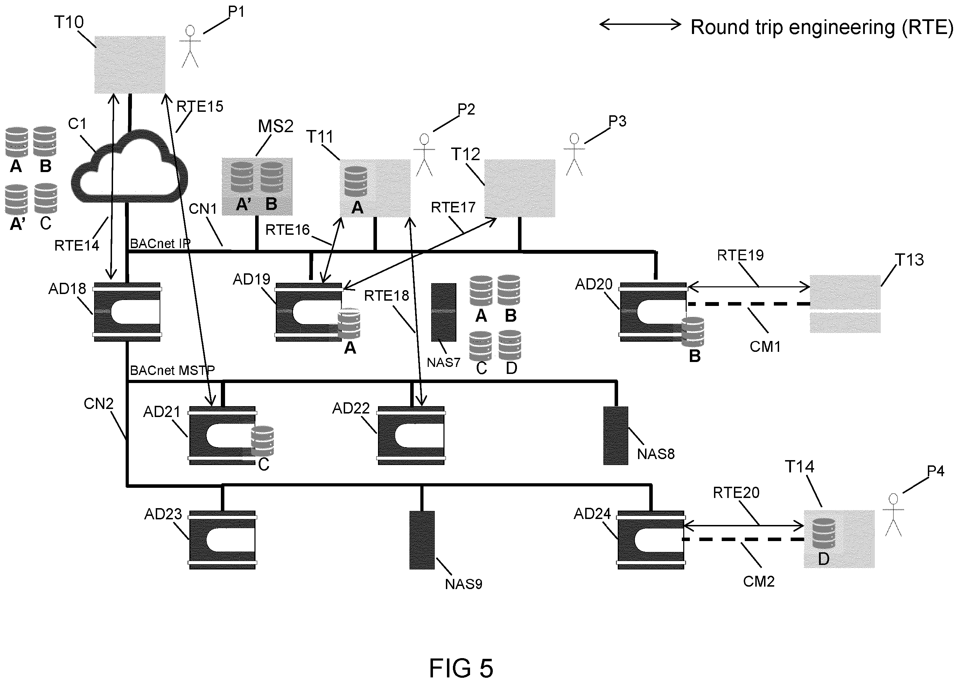

Figure 5 illustrates a fourth exemplary scenario for round-trip engineering of automation devices AD18 - AD24 by using a suitable tool T10 - T14 with multiple users working with different tools and engineering data instances. In the exemplary scenario according to figure 4 automation devices (e.g. controller) AD18 - AD24, network attached storage devices NAS7 - NAS9 and the tools T11 and T12 are connected via communication networks CN1, CN2. The communication network CN1 is realized by an exemplary BACnet IP network, the communication network CN2 is realized by an exemplary BACnet MSTP network. The communication network CN1 provides the connection to a cloud infrastructure C1. The tool T10 is connected to the cloud infrastructure C1 and has access to the communication network CN1.

The exemplary scenario according to figure 5 shows possible fields of application for the present invention to perform roundtrip engineering RTE14 - RTE20. Tool T10 is used for roundtrip engineering RTE14, RTE15 for the automation devices AD18, AD21. Tool T11 is used for roundtrip engineering RTE16, RTE18 for the automation devices AD19, AD22. Tool T12 is used for roundtrip engineering RTE17 for the automation device AD19. Tool T13 is used for roundtrip engineering RTE19 for the automation device AD20. Tool T14 is used for roundtrip engineering RTE20 for the automation device AD24. The tools T13 and T14 are not connected via networks to the respective automation device AD20 or AD24. The tools T13 and T14 are connected via suitable communication means CM1, CM2 (e.g. USB connection, connection to local port) to the respective automation device AD20 or AD24.

The exemplary scenario according to figure 5 shows that round-trip engineering RTE14 - RTE20 can be performed via local network, remote network, local port, fast network (e.g. BACnet IP or BACnet/SC), slow network (e.g. BACnet MSTP), or via cloud infrastructure C1. The exemplary scenario according to figure 5 furthermore shows that the engineering data A,B,C,D,A' for roundtrip engineering RTE14 - RTE20 can be stored locally on the tool (on tool T11 are the engineering data A; on tool T14 are the engineering data D), or on the automation device (on automation device AD19 are the engineering data A; on automation device AD20 are the engineering data B), or network attached storage devices (on network attached storage device NAS7 are the engineering data A,B,C,D), or in the cloud (in the cloud infrastructure C1 are the engineering data A,B,A',C), or on a management station (on management station MS2 are the engineering data A',B). For instance, a management station MS2 for building management systems can be Siemens Desigo CC.

The exemplary scenario according to figure 5 furthermore shows that different persons P1 - P4 in same or different roles can be involved to perform roundtrip engineering RTE14 - RTE20 for automation devices AD18 - AD24. Exemplary persons P1 - P4 in same or different roles to be involved to perform roundtrip engineering RTE14 - RTE20 can be: project engineer, installer, programmer, commissioning engineer, sub contractor, balancer, service technician or field support staff.

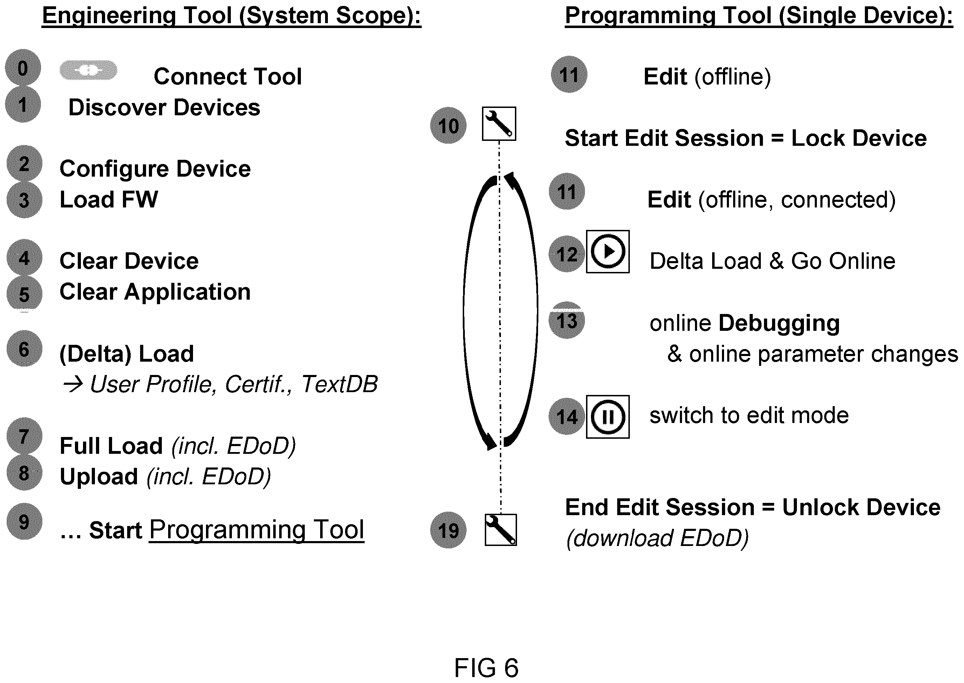

Figure 6 illustrates exemplary loading operations and services ST0 - ST19 to perform roundtrip engineering. The illustration according to figure 6 shows on the left-hand side steps ST0 to ST9 which refer to the engineering tool or system scope. In figure 6 the steps ST10 to ST19 on the right-hand side refer to the programming tool or scope to a single automation device. Loading operations may be optional (e.g. Load Firmware) or mandatory (e.g. connect tool in order to load configuration data to automation device)

Loading operations and services on engineering tool side or system scope:

| | |
|---|---|
| ST0 | Connect Tool |
| ST1 | Discover Devices |
| ST2 | Configure Device |
| ST3 | Load FW (Firmware) |
| ST4 | Clear Device |
| ST5 | Clear Application |
| ST6 | (Delta) Load → User Profiles, Certifcates, Text-Database |
| ST7 | Full Load (incl. EDoD; engineering data on device) |
| ST8 | Upload (incl. EDoD; engineering data on device) |
| ST9 | ... Start Programming Tool |

Loading operations and services on programming tool side or single (or dedicated) device scope:

| | |
|---|---|
| ST11 | Edit (offline) |
| ST10 | Start Edit Session = Lock Device |
| ST11 | Edit (offline, connected) |
| ST12 | Delta Load & Go Online |
| ST13 | online Debugging & online parameter changes |
| ST14 | switch to edit mode |
| ST19 | End Edit Session = Unlock Device (download EDoD; engineering data on device) |

Optionally the loading operations and services ST10 to ST14 are performed iteratively (indicated in figure 6 by arced arrows).

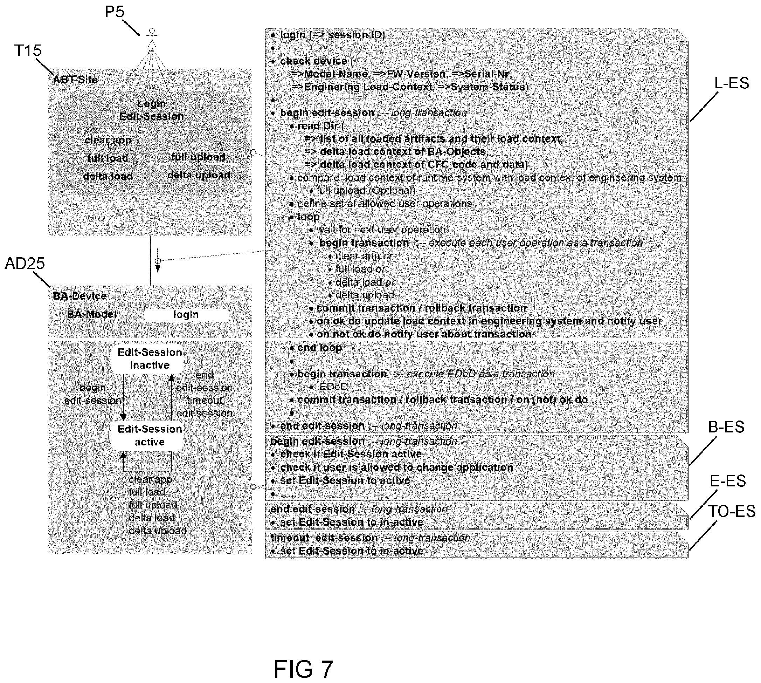

Figure 7 shows an exemplary state diagram or object model for illustrating an exemplary edit session ES for roundtrip engineering. The exemplary object diagram or object model according to figure 7 comprises an exemplary pseudo code language. Figure 7 shows an exemplary representation of a user P5 (e.g. engineer), an exemplary representation of a tool T15 (e.g. e.g. the tool ABT Site for engineering or commissioning room automation devices), an exemplary representation of an automation device AD25 (e.g. a building automation device (BA-Device)). The exemplary representation of the automation device AD25 (BA-Device) comprises an exemplary model (BA-Model) in finite state notation with the states "login", "Edit-Session inactive", and "Edit-Session active". The arrows of the BA-Model represent "transitions" between states.

The right-hand side of figure 7 shows pseudo code objects: L-ES (Login Edit Session), B-ES (Begin Edit Session), E-ES (End Edit Session), and TO-ES (Timeout Edit Session) in exemplary pseudo code notation.

The object diagram or object model according to figure 7 secures, that in an edit session only one user may concurrently execute a sequence of user operations: clear app, full load, delta load, delta upload, or full upload.

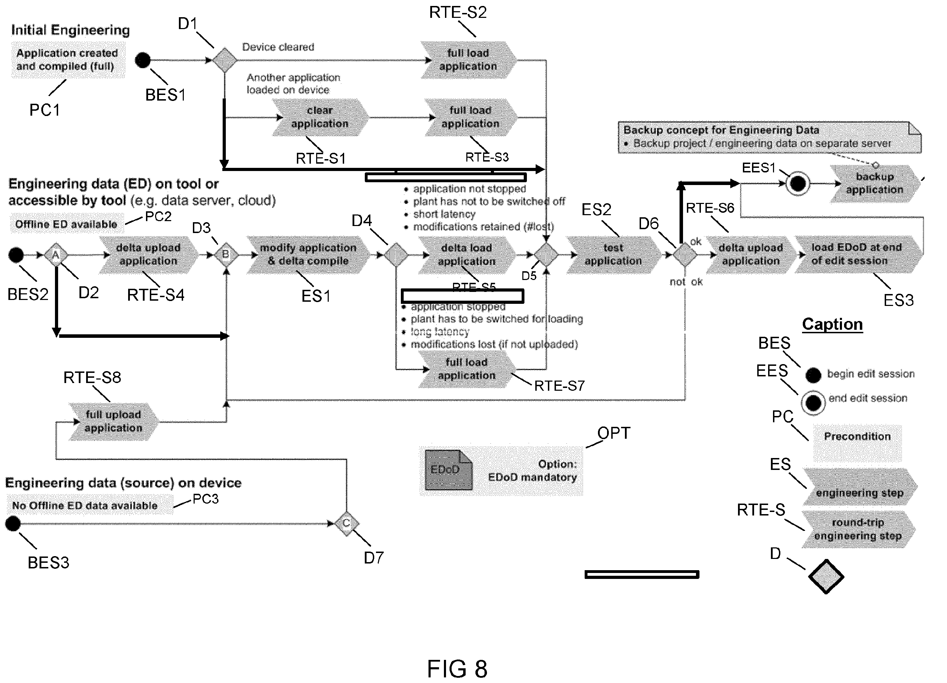

Figure 8 illustrates an exemplary flow chart for performing roundtrip engineering. Figure 8 shows three exemplary scenarios:
- Initial Engineering with the precondition PC1 (Application created and compiled (full)) and the start point BES1 for begin edit session.
- Engineering data (ED) on tool or accessible by tool (e.g. data server, cloud) with the precondition PC2 (Offline engineering data (ED) available and the start point BES2 for begin edit session.
- Engineering data (source) on device with the precondition PC3 (No Offline engineering data (ED) available and the start point BES3 for begin edit session.

Furthermore, the exemplary flow chart according to figure 8 comprises decisions D1 to D7 (rhombus symbol), engineering steps ES1 -to ES3 (arrow symbol), roundtrip engineering steps RTE-S1 to RTE-S8 (arrow symbol), and a common end edit session symbol EES1. After the end edit session EES1 a back up application BA could be performed (if necessary or practical).

In the "Engineering data (ED) on tool or accessible by tool"-scenario according to decision D4 the roundtrip engineering step RTE-S5 "delta load application" or the roundtrip engineering step RTE-S7 "full load application" will be performed.

The roundtrip engineering step RTE-S5 "delta load application" means "hitchless loading":
- Application (program execution) not stopped
- Single or multiple plants has not to be switched off
- Short latency
- Modifications on plants may retain.

The roundtrip engineering step RTE-S7 "full load application" means "no hitchless loading":
- Application (program execution) stopped
- Single or multiple plants has to be switched off for loading, plant(s) will be replaced on automation device
- Long latency
- Modifications on plants lost (if not uploaded).

As further option OPT for a requirement the engineering data on device could be mandatory.

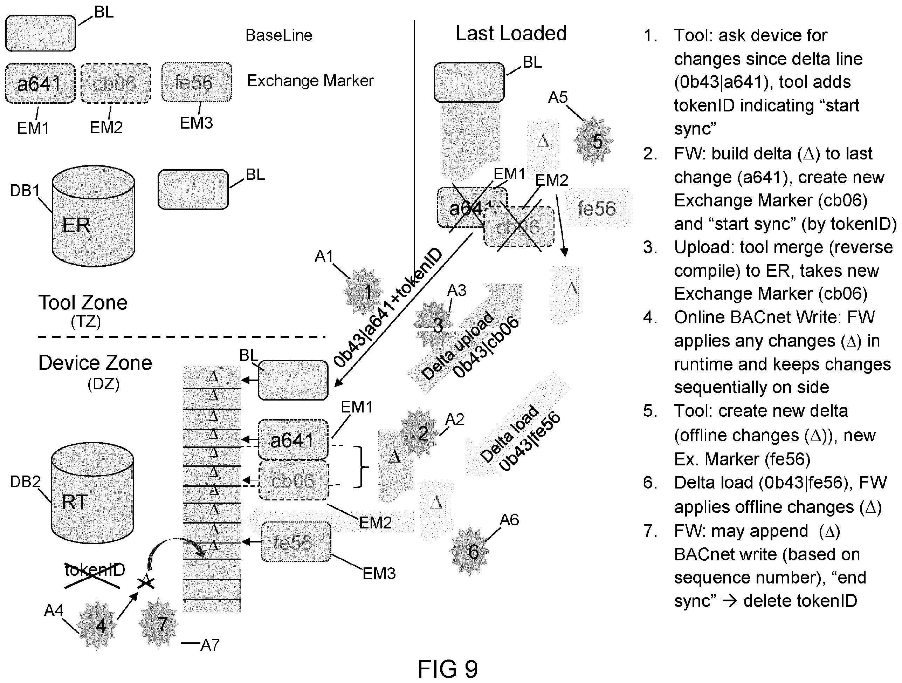

Figure 9 illustrates an exemplary diagram for changelog handling between engineering tool and device. On the left-hand side of figure 9 the dashed line separates a tool zone (TZ) and a device zone (DZ). The right-hand side of figure 9 shows and clarifies the activities A1 to A7 to be conducted for performing an exemplary exchange, especially data modification exchange. In the illustration according to figure 9 the respective activities A1 to A7 are furthermore exemplified by the star-notation 1 to 7. Starting from a common baseline BL of tool and device, the exchange marker EM1 to EM3 are indicating the change modifications in tool and on device.

The baseline BL is used for delta load determination. Advantageously the baseline BL is a defined building automation (BA) instance model status which is persisted (= "Restore Baseline") and retrievable from device (e.g. automation device, controller) or from tool. The baseline is the initial status from where delta loads with building automation (BA) Change Log starts. The baseline BL is a Globally Unique Identifier (GUID). The baseline BL uniquely identifies the Base Image on the device (e.g. automation device, controller). A new baseline is created by the engineering system and loaded to the device on each Full Load. The baseline provides information to the engineering system, e.g. whether a delta load is possible or an upload or full load is required. A new baseline is initiated by full compile, created on full load.

An Exchange Marker EM1 - EM3 points to a well defined position in the Change Log. A Change Log may have many Exchange Markers EM1 - EM3. Using Exchange Marker EM1 - EM3 arbitration supports an optimized data exchange, e.g., during commissioning phase. An Exchange Marker EM1 - EM3 can be created either offline by tool or online by firmware. The Exchange Marker EM1 - EM3 is a Globally Unique Identifier (GUID) within the device. Example: Change Log entries before a given Exchange Marker EM1 - EM3 may already be merged back to tool, and entries after Exchange Marker EM1 - EM3 still need to be synchronized. The Exchange Marker EM1 - EM3 uniquely identifies a position/entry on the change log. A new Exchange Marker EM1 - EM3 is created by the engineering system and loaded to AS on each delta load. A full load clears Change-Log-Buffer and all Exchange Marker on tool and on device. If tool requires upload of building automation (BA) online changes and there is no Exchange Marker EM1 - EM3 already pointing to last change, then a new Exchange Marker is created by the device. This Exchange Marker EM1 - EM3 is part of the upload bundle. An Exchange Marker EM1 - EM3 does not provide any semantic information.

### Activities (A1 - A7)

1. Tool: ask device for changes since delta line (0b43|a641), tool adds tokenID indicating "start sync"
2. FW: build delta (Δ) to last change EM1 (a641), create new Exchange Marker EM2 (cb06) and "start sync" (by tokenID)
3. Upload: tool merge (reverse compile) to Engineering Rep-resenation ER, takes new Exchange Marker EM2 (cb06)
4. Online BACnet Write: FW applies any online changes (Δ) in runtime and keeps changes sequentially on side
5. Tool: create new delta (offline changes (Δ)), new Ex. Marker EM3 (fe56)
6. Delta load (0b43|feb6), FW applies offline changes (Δ)
7. FW: may append (Δ) BACnet write (based on sequence number), "end sync" → delete tokenID

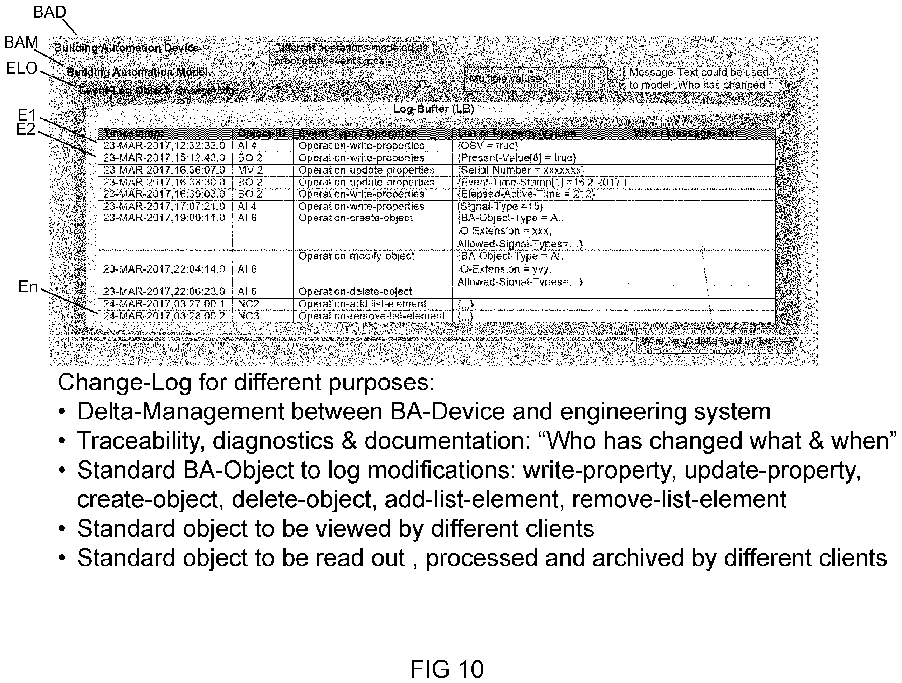

Figure 10 illustrates an exemplary Change-Log-Buffer for recorded changes on the device in an adequate object model notation. The exemplary Change-Log-Buffer LB is part of an event-log object ELO, which is part of a building automation model BAM, which is part of a building automation device BAD. The event-log object ELO records or logs the performed changes in a proper database, the Change-Log-Buffer LB. The Change-Log_Buffer LB comprises database entries E1 - En for each of the performed changes. Advantageously a change is logged with timestamp, object-ID, event-type (operation), list of property values, comment regarding the respective person who has performed the change (who / message text). Each database entry E1 - En corresponds to a respective Exchange Marker.

A change-Log database or Change-Log-Buffer (LB) provides different purposes or advantages:
- Delta-Management between BA-Device and engineering system
- Traceability, diagnostics & documentation: "Who has changed what & when"
- Standard BA-Object to log modifications: write-property, update-property, create-object, delete-object, add-list-element, remove-list-element
- Standard object to be viewed by different clients
- Standard object to be read out, processed and archived by different clients.

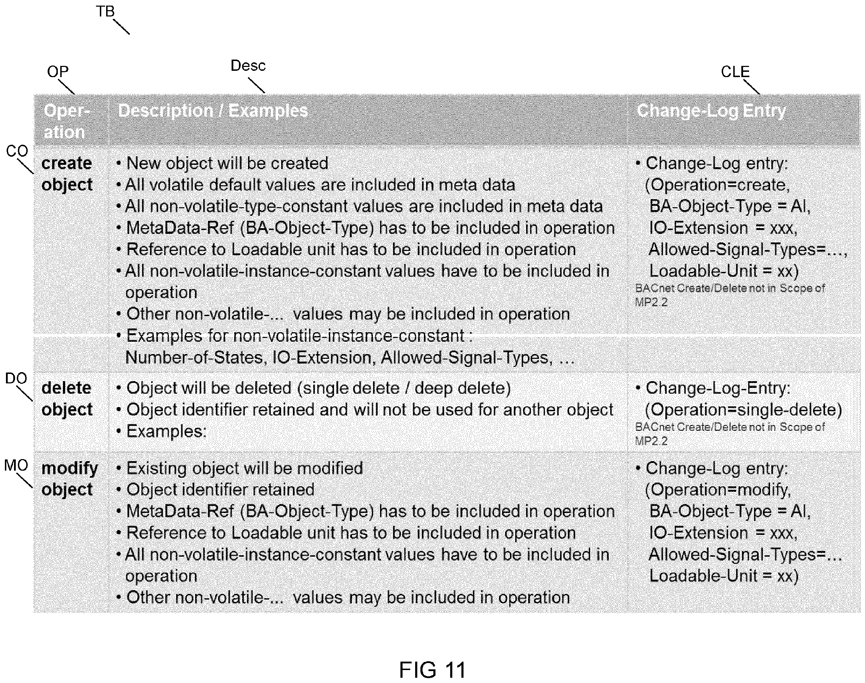

Figure 11 illustrates examples for change-log entries CLE in form of a table TB. A change-log may result by one of the following operations OP: create object CO, delete object DO, or modify object MO. The first column of table TB shows the respective operations OP: create object CO, delete object DO, or modify object MO. The second column Desc of table TB shows descriptions or examples of the respective operations. The third column CLE of table TB shows corresponding change-log entries for the respective operation. The line CO of the table TB shows for the operation create object the respective description and the respective change-log entry. The line DO of the table TB shows for the operation delete object the respective description and the respective change-log entry. The line MO of the table TB shows for the operation modify object the respective description and the respective change-log entry.

A method and a tool (e.g. engineering or commissioning tool) for controlling access to an automation device, especially a building automation device, for engineering and/or commissioning the automation device, wherein only one user is allowed to lock the automation device for engineering and/or commissioning by starting an edit session; wherein the automation device stays running and accessible in an online modus during the edit session; wherein other users can see the device lock status of the active edit session and see the last engineering or commissioning action of the automation device in the runtime system; wherein no other users are able to lock the already locked automation device to start a further edit session; and wherein only the user who locked the automation device is able to unlock the automation device to end the started edit session.

### Reference Signs

- S1 - S5: Step
- C, C1: Cloud
- T, T1 - T15: Tool
- I: Interface
- IM: Input Means
- OM: Output Means
- PR, PR1 - PR3: Processor
- M, M1 - M3: Memory
- CN, CN1 - CN2: Communication Network
- RTE, RTE1 - RTE20: Roundtrip Engineering
- AD1 - AD25: Automation Device
- NAS1 - NAS9: Network Attached Storage
- CM1 - CM2: Communication Means
- MS1, MS2: Management Station
- A, B, C, D, A': Engineering Data
- P1 - P5: User
- L-ES: Login Edit Session
- B-ES, BES, BES1 - BES3: Begin Edit Session
- E-ES, EES, EES1: End Edit Session
- TO-ES: Timeout Edit Session
- PC, PC1 - PC3: Precondition
- ES, ES1 - ES3: Engineering Step
- RTE-S, RTE-S1 - RTE-S8: Roundtrip Engineering Step
- D, D1 - D7: Decision
- OPT: Option
- BA: Backup Application
- A1 - A7: Activity
- BL: Baseline
- EM1 - EM3: Exchange Marker
- DB1, DB2: Database
- TZ: Tool Zone
- DZ: Device Zone
- LB: Log-Buffer
- ELO: Event-Log Object
- BAM: Building Automation Model
- BAD: Building Automation Device
- E1 - En: Database Entry
- TB: Table
- OP: Operation
- Desc: Description
- CLE: Change-Log Entry
- CO: Create Object
- DO: Delete Object
- MO: Modify Object
- ST0 - ST19: Loading operations and services

## Claims

1. A method for controlling access to an automation device (AD1 - AD25), for
round-trip engineering the automation device (AD1 - AD25) with multiple users working with different tools and engineering data instances, the method being implemented by a tooling device (T, T1-T5) and comprising the features:
(S1) wherein only one user (P1 - P5) is allowed to lock the automation device (AD1 - AD25) for engineering at a given time by starting an edit session;
(S2) wherein the automation device (AD1 - AD25) stays running and accessible in an online modus during the edit session;
(S3) wherein other users (P1 - P5) can see the device lock status of the active edit session and see the last engineering action of the automation device (AD1 - AD25) in a runtime system;
(S4) wherein no other users (P1 - P5) are able to lock the already locked automation device to start a further edit session;
(S5) wherein only the user (P1 - P5) who locked the automation device (AD1 - AD25) is able to unlock the automation device (AD1 - AD25) to end the started edit session,
wherein during an edit session , the automation device (AD1 - AD25) stays in run mode and online changes occur simultaneously,
wherein during the edit session, the user (P1 - P5) changes device configuration like control program or data point configuration and perform fast delta load,
wherein software artefacts are synchronized on the automation devices (AD1 - AD25) to secure the consistency of the respective software artefacts by incrementally updating the respective artefacts;
wherein the automation device (AD1 - AD25) incorporates all changes without stopping the plant operation.

2. The method according to claim 1, wherein the last engineering action provides information about the user (P1 - P5) who was locking the automation device (AD1 - AD25).

3. The method according to one of the preceding claims, wherein the automation device (AD1 - AD25) will be automatically unlocked after a defined timeout period in case of no tool interactions or user has forgotten to unlock the automation device (AD1 - AD25).

4. The method according to one of the preceding claims, wherein during a edit session, the user performs multiple change and download commands for the automation device (AD1 - AD25).

5. The method according to one of the preceding claims, wherein by starting the edit session , engineering data on the tooling device (T, T1 - T15) are automatically updated with last online changes.

6. The method according to one of the preceding claims, wherein during an engineering session all loading activities are logged.

7. The method according to one of the preceding claims, wherein the method is used for commissioning the automation device (AD1 - AD25).

8. A tool (T, T1 - T15) for round-trip engineering automation devices (AD1 - AD25),
wherein the tool (T, T1 - T15) is configured such that
only one user (P1 - P5) is allowed to lock the automation device (AD1 - AD25) for engineering at a given time by starting an edit session;
the automation device (AD1 - AD25) stays running and accessible in an online-modus during the edit session initiated by the tool (T, T1 - T15);
other users (P1 - P5) can see the device lock status of the active edit session and see the last engineering action of the automation device (AD1 - AD25) in a runtime system;
no other users (P1 - P5) are able to lock the already locked automation device (AD1 - AD25) to start a further edit session;
only the user (P1 - P5) who locked the automation device (AD1 - AD25) is able to unlock the automation device (AD1 - AD25) to end the started edit session;
wherein the tool (T, T1 - T15) is configured that during the edit session the automation device (AD1 - AD25) stays in run mode, and online changes occur simultaneously;
wherein the tool (T, T1 - T15) is configured that during the edit session,
the user (P1 - P5) is able to change device configuration like control program or data point configuration and perform fast delta load of data to the automation device (AD1 - AD25),
software artefacts are synchronized on the automation devices (AD1 - AD25) to secure the consistency of the respective software artefacts by incrementally updating the respective artefacts;
wherein the automation device (AD1 - AD25) incorporates all changes without stopping the plant operation.

9. The tool (T, T1 - T15) according to claim 8, wherein the tool (T, T1 - T15) is configured to provide the last engineering action information about the user (P1 - P5) who was locking the automation device (AD1 - AD25).

10. The tool (T, T1 - T15) according to claim 8 or 9, wherein the tool (T, T1 - T15) is configured to unlock the automation device (AD1 - AD25) after an edit session after a defined timeout period in case of no tool interactions or user has forgotten to unlock the automation device (AD1 - AD25).

11. The tool (T, T1 - T15) according to one of the claims 8 to 10, wherein the tool (T, T1 - T15) is configured that during the edit session, the user (P1 - P5) is able to perform multiple change and/or download commands for the automation device (AD1 - AD25).

12. The tool (T, T1 - T15) according to one of the claims 8 to 11, wherein the tool (T, T1 - T15) is configured that by starting the edit session, engineering data are automatically updated with last online changes.

13. The tool (T, T1 - T15) according to one of the claims 8 to 12, wherein the tool (T, T1 - T15) is configured to send periodically a heartbeat-signal earlier than the automation device time-out to the automation device (AD1 - AD25).

14. The tool (T, T1 - T15) according to one of the claims 8 to 13, wherein the tool (T, T1 - T15) is configured for commissioning automation devices (AD1 - AD25).

## Patentansprüche

1. Verfahren zum Regeln des Zugriffs auf eine Automationsvorrichtung (AD1 - AD25) für ein Round-Trip-Engineering der Automationsvorrichtung (AD1 - AD25), wobei mehrere Benutzer mit verschiedenen Tools und Engineering-Dateninstanzen arbeiten, wobei das Verfahren durch eine Tooling-Vorrichtung (T, T1 - T5) umgesetzt wird und folgende Merkmale umfasst:
(S1) wobei nur ein Benutzer (P1 - P5) die Automationsvorrichtung (AD1 - AD25) zu einer gegebenen Zeit für ein Engineering sperren darf, indem er eine Bearbeitungssitzung beginnt,
(S2) wobei die Automationsvorrichtung (AD1 - AD25) im Verlauf der Bearbeitungssitzung weiterläuft und in einem Online-Modus zugänglich bleibt,
(S3) wobei andere Benutzer (P1 - P5) den Vorrichtungssperrzustand in der aktuellen Bearbeitungssitzung und die letzte Engineering-Maßnahme der Automationsvorrichtung (AD1 - AD25) in einem Laufzeitsystem sehen können,
(S4) wobei keine anderen Benutzer (P1 - P5) die bereits gesperrte Automationsvorrichtung sperren und so eine weitere Bearbeitungssitzung beginnen können,
(S5) wobei nur der Benutzer (P1 - P5), der die Automationsvorrichtung (AD1 - AD25) gesperrt hat, in der Lage ist, sie zu entsperren und so die begonnene Bearbeitungssitzung zu beenden,
wobei die Automationsvorrichtung (AD1 - AD25) im Verlauf einer Bearbeitungssitzung im Run-Modus bleibt und Online-Änderungen gleichzeitig erfolgen,
wobei der Benutzer (P1 - P5) im Verlauf der Bearbeitungssitzung eine Vorrichtungskonfiguration wie Steuerprogramm- oder Datenpunktkonfiguration ändert und einen schnellen Delta-Load durchführt,
wobei
Software-Artefakte in den Automationsvorrichtungen (AD1 - AD25) synchronisiert werden und so durch schrittweises Aktualisieren der jeweiligen Artefakte die Stimmigkeit der jeweiligen Software-Artefakte abgesichert wird,
wobei die Automationsvorrichtung (AD1 - AD25) alle Änderungen vornimmt, ohne den Betrieb der Anlage zu stoppen.

2. Verfahren nach Anspruch 1, wobei die letzte Engineering-Maßnahme Informationen zum Benutzer (P1 - P5) liefert, der die Automationsvorrichtung (AD1 - AD25) gesperrt hat.

3. Verfahren nach einem der vorhergehenden Ansprüche, wobei die Automationsvorrichtung (AD1 - AD25) nach einem festgelegten Unterbrechungszeitraum automatisch entsperrt wird, falls es keine Tool-Interaktionen gab oder ein Benutzer vergessen hat, die Automationsvorrichtung (AD1 - AD25) zu entsperren.

4. Verfahren nach einem der vorhergehenden Ansprüche, wobei der Benutzer im Verlauf einer Bearbeitungssitzung mehrere Änderungs- und Herunterladebefehle für die Automationsvorrichtung (AD1 - AD25) durchführt.

5. Verfahren nach einem der vorhergehenden Ansprüche, wobei durch Beginnen der Bearbeitungssitzung Engineering-Daten zur Tooling-Vorrichtung (T, T1 - T15) automatisch mit den letzten Online-Änderungen aktualisiert werden.

6. Verfahren nach einem der vorhergehenden Ansprüche, wobei im Verlauf einer Engineering-Sitzung alle Ladeaktivitäten registriert werden.

7. Verfahren nach einem der vorhergehenden Ansprüche, wobei das Verfahren für die Inbetriebnahme der Automationsvorrichtung (AD1 - AD25) benutzt wird.

8. Tool (T, T1 - T15) für das Round-Trip-Engineering von Automationsvorrichtungen (AD1 - AD25),
wobei das Tool (T, T1 - T15) so konfiguriert ist, dass
nur ein Benutzer (P1 - P5) die Automationsvorrichtung (AD1 - AD25) zu einer gegebenen Zeit für ein Engineering sperren darf, indem er eine Bearbeitungssitzung beginnt,
die Automationsvorrichtung (AD1 - AD25) im Verlauf der von dem Tool (T, T1 - T15) eingeleiteten Bearbeitungssitzung weiterläuft und in einem Online-Modus zugänglich bleibt,
andere Benutzer (P1 - P5) den Vorrichtungssperrzustand in der aktuellen Bearbeitungssitzung und die letzte Engineering-Maßnahme der Automationsvorrichtung (AD1 - AD25) in einem Laufzeitsystem sehen können,
keine anderen Benutzer (P1 - P5) die bereits gesperrte Automationsvorrichtung (AD1 - AD25) sperren und so eine weitere Bearbeitungssitzung beginnen können,
nur der Benutzer (P1 - P5), der die Automationsvorrichtung (AD1 - AD25) gesperrt hat, in der Lage ist, sie zu entsperren und so die begonnene Bearbeitungssitzung zu beenden,
wobei das Tool (T, T1 - T15) so konfiguriert ist, dass die Automationsvorrichtung (AD1 - AD25) im Verlauf der Bearbeitungssitzung im Run-Modus bleibt und Online-Änderungen gleichzeitig erfolgen,
wobei das Tool (T, T1 - T15) so konfiguriert ist, dass im Verlauf der Bearbeitungssitzung
der Benutzer (P1 - P5) in der Lage ist, eine Vorrichtungskonfiguration wie Steuerprogramm- oder Datenpunktkonfiguration zu ändern und einen schnellen Delta-Load von Daten auf die Automationsvorrichtung (AD1 - AD25) durchzuführen,
Software-Artefakte in den Automationsvorrichtungen (AD1 - AD25) synchronisiert werden und so durch schrittweises Aktualisieren der jeweiligen Artefakte die Stimmigkeit der jeweiligen Software-Artefakte abgesichert wird,
wobei die Automationsvorrichtung (AD1 - AD25) alle Änderungen vornimmt, ohne den Betrieb der Anlage zu stoppen.

9. Tool (T, T1 - T15) nach Anspruch 8, wobei das Tool (T, T1 - T15) so konfiguriert ist, dass es die Informationen zur letzten Engineering-Maßnahme zu dem Benutzer (P1 - P5) liefert, der die Automationsvorrichtung (AD1 - AD25) gesperrt hat.

10. Tool (T, T1 - T15) nach Anspruch 8 oder 9, wobei das Tool (T, T1 - T15) so konfiguriert ist, dass es die Automationsvorrichtung (AD1 - AD25) nach einem festgelegten Unterbrechungszeitraum nach einer Bearbeitungssitzung entsperrt, falls es keine Tool-Interaktionen gab oder der Benutzer vergessen hat, die Automationsvorrichtung (AD1 - AD25) zu entsperren.

11. Tool (T, T1 - T15) nach einem der Ansprüche 8 bis 10, wobei das Tool (T, T1 - T15) so konfiguriert ist, dass der Benutzer (P1 - P5) im Verlauf der Bearbeitungssitzung in der Lage ist, mehrere Änderungs- und/oder Herunterladebefehle für die Automationsvorrichtung (AD1 - AD25) durchzuführen.

12. Tool (T, T1 - T15) nach einem der Ansprüche 8 bis 11, wobei das Tool (T, T1 - T15) so konfiguriert ist, dass durch Beginnen der Bearbeitungssitzung Engineering-Daten automatisch mit den letzten Online-Änderungen aktualisiert werden.

13. Tool (T, T1 - T15) nach einem der Ansprüche 8 bis 12, wobei das Tool (T, T1 - T15) so konfiguriert ist, dass es regelmäßig vor der Unterbrechung der Automationsvorrichtung ein Heartbeat-Signal zur Automationsvorrichtung (AD1 - AD25) sendet.

14. Tool (T, T1 - T15) nach einem der Ansprüche 8 bis 13, wobei das Tool (T, T1 - T15) für die Inbetriebnahme von Automationsvorrichtungen (AD1 - AD25) konfiguriert ist.

## Revendications

1. Procédé de contrôle d'accès à un dispositif d'automatisation (AD1-AD25), pour l'ingénierie aller-retour du dispositif d'automatisation (AD1-AD25) avec de multiples utilisateurs travaillant avec des outils et des instances de données d'ingénierie différents, le procédé étant mis en œuvre par un dispositif d'outillage (T, T1-T5) et comprenant les caractéristiques suivantes :
(S1) dans lequel un seul utilisateur (P1-P5) est autorisé à un moment donné à verrouiller le dispositif d'automatisation (AD1-AD25) par démarrage d'une session de modification ;
(S2) dans lequel le dispositif d'automatisation (AD1-AD25) reste en marche et accessible dans un mode en ligne pendant la session de modification ;
(S3) dans lequel d'autres utilisateurs (P1-P5) peuvent voir l'état de verrouillage de dispositif de la session de modification active et voir la dernière action d'ingénierie du dispositif d'automatisation (AD1-AD25) dans un environnement d'exécution ;
(S4) dans lequel aucun autre utilisateur (P1-P5) n'est capable de verrouiller le dispositif d'automatisation déjà verrouillé pour démarrer une autre session de modification ;
(S5) dans lequel seul l'utilisateur (P1-P5) qui a verrouillé le dispositif d'automatisation (AD1-AD25) est capable de déverrouiller le dispositif d'automatisation (AD1-AD25) pour terminer la session de modification démarrée,
dans lequel, pendant une session de modification, le dispositif d'automatisation (AD1-AD25) reste en mode d'exécution et des changements en ligne se produisent simultanément,
dans lequel, pendant la session de modification, l'utilisateur (P1-P5) change une configuration de dispositif comme une configuration de programme de commande ou de point de données et effectue un chargement rapide de deltas,
dans lequel des artéfacts logiciels sont synchronisés sur les dispositifs d'automatisation (AD1-AD25) pour garantir la cohérence des artéfacts logiciels respectifs par mise-à-jour incrémentale des artéfacts respectifs ;
dans lequel le dispositif d'automatisation (AD1-AD25) incorpore tous les changements sans avoir à arrêter le fonctionnement de l'installation.

2. Procédé selon la revendication 1, dans lequel la dernière action d'ingénierie fournit des informations concernant l'utilisateur (P1-P5) qui verrouillait le dispositif d'automatisation (AD1-AD25).

3. Procédé selon l'une des revendications précédentes, dans lequel le dispositif d'automatisation (AD1-AD25) sera déverrouillé automatiquement après une période de temporisation définie en cas d'absence d'interactions d'outil ou si l'utilisateur a oublié de déverrouiller le dispositif d'automatisation (AD1-AD25).

4. Procédé selon l'une des revendications précédentes, dans lequel, pendant une session de modification, l'utilisateur effectue de multiples commandes de changement et de téléchargement pour le dispositif d'automatisation (AD1-AD25).

5. Procédé selon l'une des revendications précédentes, dans lequel, en démarrant la session de modification, des données d'ingénierie sur le dispositif d'outillage (T, T1-T15) sont mises à jour automatiquement avec les derniers changements en ligne.

6. Procédé selon l'une des revendications précédentes, dans lequel, pendant une session d'ingénierie, toutes les activités de chargement sont consignées.

7. Procédé selon l'une des revendications précédentes, dans lequel le procédé est utilisé pour la mise en service du dispositif d'automatisation (AD1-AD25).

8. Outil (T, T1-T15) pour des dispositifs d'automatisation d'ingénierie aller-retour (AD1-AD25), dans lequel l'outil (T, T1-T15) est configuré de sorte que
un seul utilisateur (P1-P5) est autorisé à un moment donné à verrouiller le dispositif d'automatisation (AD1-AD25) par démarrage d'une session de modification ;
le dispositif d'automatisation (AD1-AD25) reste en marche et accessible dans un mode en ligne pendant la session de modification initiée par l'outil (T, T1-T15) ;
d'autres utilisateurs (P1-P5) peuvent voir l'état de verrouillage de dispositif de la session de modification active et voir la dernière action d'ingénierie du dispositif d'automatisation (AD1-AD25) dans un environnement d'exécution ;
aucun autre utilisateur (P1-P5) n'est capable de verrouiller le dispositif d'automatisation (AD1-AD25) déjà verrouillé pour démarrer une autre session de modification ;
seul l'utilisateur (P1-P5) qui a verrouillé le dispositif d'automatisation (AD1-AD25) est capable de déverrouiller le dispositif d'automatisation (AD1-AD25) pour terminer la session de modification démarrée ;
dans lequel l'outil (T, T1-T15) est configuré de sorte que, pendant la session de modification, le dispositif d'automatisation (AD1-AD25) reste en mode d'exécution et des changements en ligne se produisent simultanément,
dans lequel l'outil (T, T1-T15) est configuré de sorte que, pendant la session de modification, l'utilisateur (P1-P5) est capable de changer une configuration de dispositif comme une configuration de programme de commande ou de point de données et effectuer un chargement rapide de deltas de données vers le dispositif d'automatisation (AD1-AD25),
des artéfacts logiciels sont synchronisés sur les dispositifs d'automatisation (AD1-AD25) pour garantir la cohérence des artéfacts logiciels respectifs par mise-à-jour incrémentale des artéfacts respectifs ;
dans lequel le dispositif d'automatisation (AD1-AD25) incorpore tous les changements sans avoir à arrêter le fonctionnement de l'installation.

9. Outil (T, T1-T15) selon la revendication 8, dans lequel l'outil (T, T1-T15) est configuré pour fournir des informations de la dernière action d'ingénierie concernant l'utilisateur (P1-P5) qui verrouillait le dispositif d'automatisation (AD1-AD25).

10. Outil (T, T1-T15) selon la revendication 8 ou 9, dans lequel l'outil (T, T1-T15) est configuré pour déverrouiller le dispositif d'automatisation (AD1-AD25) après une session de modification après une période de temporisation définie en cas d'absence d'interactions d'outil ou si l'utilisateur a oublié de déverrouiller le dispositif d'automatisation (AD1-AD25).

11. Outil (T, T1-T15) selon l'une des revendications 8 à 10, dans lequel l'outil (T, T1-T15) est configuré de sorte que, pendant une session de modification, l'utilisateur (P1-P5) est capable d'effectuer de multiples commandes de changement et/ou de téléchargement pour le dispositif d'automatisation (AD1-AD25).

12. Outil (T, T1-T15) selon l'une des revendications 8 à 11, dans lequel l'outil (T, T1-T15) est configuré de sorte qu'en démarrant la session de modification, des données d'ingénierie sont mises à jour automatiquement avec les derniers changements en ligne.

13. Outil (T, T1-T15) selon l'une des revendications 8 à 12, dans lequel l'outil (T, T1-T15) est configuré pour envoyer périodiquement au dispositif d'automatisation (AD1-AD25) un signal de battement de cœur antérieurement à la temporisation du dispositif d'automatisation.

14. Outil (T, T1-T15) selon l'une des revendications 8 à 13, dans lequel l'outil (T, T1-T15) est configuré pour la mise en service de dispositifs d'automatisation (AD1-AD25).
